# FASCICULE DE BREVET EUROPEEN

(11) **EP 3 996 987 B1**
(45) Date de publication et mention de la délivrance du brevet: **20.03.2024**
(21) Numéro de dépôt: 20735616.3
(22) Date de dépôt: 06.07.2020
(51) Int. Cl.: B64C 1/14, B64D 25/08

(54) **DISPOSITIF D'OUVERTURE D'URGENCE D'UNE PORTE D'AERONEF A FIL DE RETENUE**
NOTÖFFNUNGSVORRICHTUNG EINER FLUGZEUGTÜR MIT EINEM HALTEDRAHT
EMERGENCY OPENING DEVICE OF AN AIRCRAFT DOOR WITH RETAINING WIRE

(30) Priorité: 08.07.2019 FR 1907576
(43) Date de publication de la demande: 18.05.2022
(73) Titulaire: Latecoere, 31500 Toulouse, Occitanie (FR)
(72) Inventeur: DEVILLEZ, Sébastien, 31240 SAINT JEAN OCCITANIE (FR)
(74) Mandataire: Junca, Eric
(86) Numéro de dépôt international: PCT/EP2020/069041
(87) Numéro de publication internationale: WO 2021/005021

(56) Documents cités:
- FR-A1- 2 975 967

## Description

### DOMAINE TECHNIQUE

L'invention concerne le domaine de l'aéronautique et concerne plus particulièrement un dispositif d'ouverture d'urgence d'une porte d'aéronef.

Les portes d'aéronefs peuvent être ouvertes pour permettre l'accès à la cabine ou aux soutes, ou pour permettre l'évacuation en cas d'urgence. En cas d'évacuation d'urgence des passagers, les portes d'aéronefs, qu'elles soient des portes de passager ou des portes d'évacuation d'urgence, comportent usuellement un dispositif d'ouverture d'urgence qui, s'il est activé, provoque une ouverture rapide et sans effort des portes, sans nécessiter d'intervention humaine autre que son déclenchement. Il est impératif que le déclenchement du dispositif d'ouverture d'urgence ne demande que peu d'efforts.

### ART ANTÉRIEUR

A l'heure actuelle, tel que notamment décrit dans les demandes de brevet FR2830564 et EP071073, les moyens d'actionnement consistent classiquement en un actionneur de type pneumatique alimenté au moyen d'une réserve annexe de fluide moteur. De tels moyens d'actionnement présentent toutefois plusieurs inconvénients. En effet, et en premier lieu, ils s'avèrent d'un poids et d'un encombrement relativement importants, en raison notamment de la présence de la réserve annexe de fluide moteur. De plus, ils imposent d'effectuer un contrôle périodique de la pression du fluide moteur, et de remplacer périodiquement la réserve annexe même en l'absence d'utilisation de cette dernière. Enfin, après activation du dispositif d'ouverture d'urgence ces moyens d'actionnement imposent, en vue d'être à nouveau opérationnels, un remplacement de la réserve annexe de fluide moteur.

Une autre solution actuelle décrite notamment dans la demande de brevet FR2864021 permet de diminuer l'encombrement et le poids des moyens d'actionnement. En effet, selon cette solution, les moyens d'actionnement consistent en un vérin pyrotechnique, c'est-à-dire un vérin autonome n'exigeant pas de source d'alimentation en fluide moteur. Par contre, de tels vérins pyrotechniques nécessitent d'être périodiquement inspectés et remplacés même en l'absence d'utilisation. Ces vérins pyrotechniques doivent, en outre, être également remplacés après activation du dispositif d'ouverture d'urgence.

La demande de brevet FR2975967 décrit un dispositif d'ouverture d'urgence d'aéronef qui pallie les inconvénients décrits ci-dessus. Ce dispositif d'ouverture d'urgence consiste en des moyens d'actionnement de conception mécanique permettant de se passer d'éléments pneumatiques ou pyrotechniques. Le poids et l'encombrement du dispositif d'ouverture d'urgence sont ainsi réduits, la fiabilité est augmentée, et ce dispositif requiert peu ou pas de maintenance. Cependant, le dispositif d'ouverture d'urgence décrit nécessite des moyens d'activation comportant un électroaimant. Ce dispositif d'ouverture d'urgence n'est donc pas entièrement mécanique puisqu'il a recours à un élément électromécanique qui nécessite une source d'énergie électrique externe, ainsi qu'un dispositif de commande adapté à relier l'électroaimant à cette source d'énergie électrique externe. Ce dispositif d'ouverture de porte nécessite donc, en plus de cette source d'énergie électrique externe, des câblages d'alimentation et de commande qui peuvent être une source supplémentaire de complexité et de dysfonctionnement. La raison pour laquelle un électroaimant est nécessaire dans ce dispositif d'ouverture d'urgence est que l'organe de retenue exerce une force importante sur un organe de manoeuvre, de sorte que le passage en position ouverte de l'organe de retenue en vue de libérer l'organe de manoeuvre pour l'ouverture d'urgence nécessite de vaincre cette force. Le dispositif d'ouverture d'urgence comporte un tronçon de réarmement et des mâchoires qui permettent d'obtenir un effort de retenue très important permettant d'utiliser des moyens élastiques présentant un tarage conséquent. Dans cette configuration, la réalisation d'un organe de retenue purement mécanique, et activable par un individu, nécessiterait un bras de levier trop important et incompatible avec les objectifs de compacité du dispositif d'ouverture d'urgence.

### EXPOSÉ DE L'INVENTION

Le but de l'invention est d'améliorer les dispositifs d'ouverture d'urgence de l'art antérieur en fournissant un tel dispositif dont le fonctionnement et la commande sont entièrement mécaniques et dont le déclenchement ne nécessite que peu d'effort de la part de l'utilisateur.

A cet effet, l'invention vise un dispositif d'ouverture d'urgence comprenant :
- un organe d'actionnement tubulaire doté d'une première extrémité de liaison et d'une deuxième extrémité de liaison, cet organe d'actionnement tubulaire étant commutable entre une position rétractée de repos et une position déployée d'ouverture ;
- des moyens élastiques de compression adaptés à solliciter l'organe d'actionnement tubulaire de sa position rétractée vers sa position déployée ;
- un organe de retenue de l'organe d'actionnement tubulaire dans sa position rétractée avec les moyens élastiques de compression maintenus comprimés ;
- des moyens de déclenchement adaptés à libérer l'organe de retenue et provoquer le passage de l'organe d'actionnement tubulaire à sa position déployée sous l'effet de l'expansion des moyens élastiques de compression.

Dans ce dispositif d'ouverture d'urgence :
- l'organe de retenue comporte un fil de retenue qui, lorsque l'organe d'actionnement tubulaire est en position rétractée, est maintenu tendu entre une première fixation à la première extrémité de liaison et une deuxième fixation à la deuxième extrémité de liaison de l'organe d'actionnement tubulaire ;
- les moyens de déclenchement comportent un organe de sectionnement transversal du fil de retenue.

Un tel dispositif d'ouverture d'urgence présente tous les avantages d'un dispositif mécanique tel que décrit dans le document FR2975967. Ces moyens d'actionnement présentent un poids et un encombrement réduit. La conception mécanique des moyens d'actionnement ne requiert pas de maintenance particulière en l'absence d'utilisation du dispositif d'ouverture. Aucun fluide moteur n'est nécessaire pour activer les moyens d'actionnement.

Le dispositif selon l'invention est, de plus, entièrement mécanique et ne requiert aucun branchement à une source d'énergie externe ni à une commande déportée. Un tel dispositif forme un produit fini de type vérin mécanique entièrement autonome, ce qui est un gage de fiabilité et de sûreté de fonctionnement appréciables dans le domaine de l'aéronautique et plus particulièrement des dispositifs d'ouverture de secours et/ou d'urgence.

Bien que le dispositif selon l'invention soit entièrement mécanique et autonome, il peut comporter des moyens élastiques à tarage important, c'est-à-dire destinés à exercer une force d'ouverture importante sur le mécanisme d'ouverture de la porte, ce qui est nécessaire dans cette application d'ouverture d'urgence de porte. Malgré le tarage important des éléments élastiques, l'activation des moyens d'actionnement se fait sans efforts. Le fil de retenue permet un important découplage entre la force permettant de maintenir le tarage des moyens élastiques, et la force nécessaire au déclenchement du dispositif. Même avec des moyens élastique de fort tarage impliquant une forte tension du fil, son sectionnement transversal nécessitera une force minime. Le ratio effort de retenue/effort de déclenchement est très favorable et l'invention permet une augmentation du tarage des moyens élastiques tout en diminuant l'effort de déclenchement.

Dans le dispositif d'ouverture d'urgence selon l'invention, la retenue de l'organe d'actionnement ne repose sur aucun mécanisme mobile dont les pièces nécessiteraient des moyens complexes pour rester mobile sous charge (roulements, bagues, etc.) et seraient soumise à de l'usure par friction, matage, et autres inconvénients relatifs au pièces mécaniques mobiles maintenues sous fortes charges.

L'invention permet une simplification drastique des dispositifs d'ouverture d'urgence de l'art antérieur en supprimant de nombreuses pièces mécaniques ce qui rend le dispositif plus léger, plus compact et plus fiable, en plus d'abaisser son cout.

Le dispositif d'ouverture d'urgence selon l'invention peut comporter les caractéristiques additionnelles suivantes, seules ou en combinaison :
- la première extrémité de liaison comporte une première paroi de fond sur laquelle est disposée la première fixation, et la deuxième extrémité de liaison comporte une deuxième paroi de fond sur laquelle est disposée la deuxième fixation ;
- la première fixation comporte un premier orifice de retenue, pratiqué dans la première paroi de fond, dans lequel est engagé une première extrémité du fil de retenue, et la deuxième fixation comporte un deuxième orifice de retenue, pratiqué dans la deuxième paroi de fond, dans lequel est engagé une deuxième extrémité du fil de retenue ;
- la première fixation comprend, à la première extrémité du fil de retenue, une première pièce de blocage du fil de retenue par rapport au premier orifice de retenue, et la deuxième fixation comprend, à la deuxième extrémité du fil de retenue, une deuxième pièce de blocage du fil de retenue par rapport au deuxième orifice de retenue ;
- la première pièce de blocage comporte un premier insert fixé sur le fil de retenue, et la deuxième pièce de blocage comporte un deuxième insert fixé sur le fil de retenue ;
- dans le dispositif : le premier insert présente une dimension radiale supérieure à la dimension radiale du deuxième insert ; le premier orifice de retenue présente un diamètre supérieur à la dimension radiale du deuxième insert et inférieur à la dimension radiale du premier insert ; le deuxième orifice de retenue présente un diamètre supérieur à la dimension radiale du deuxième insert ; la deuxième pièce de blocage comporte une fixation de blocage du deuxième insert pour le blocage du deuxième insert par rapport au deuxième orifice de retenue ;
- la fixation de blocage est un flasque mobile en rotation et comportant une gorge de blocage du deuxième insert ;
- le fil de retenue peut être constitué par exemple d'un faisceau de fibres de carbone ou d'aramide ;
- l'organe de sectionnement transversal comprend un couteau de déclenchement s'étendant dans un plan de coupe sensiblement perpendiculaire au fil de retenue, le couteau de déclenchement étant monté pivotant sur l'organe d'actionnement, autour d'un pivot perpendiculaire au plan de coupe ;
- l'organe de sectionnement transversal comporte un levier de commande saillant de l'organe d'actionnement et adapté à entraîner l'organe de sectionnement transversal contre le fil de retenue par pivotement autour du pivot ;
- le couteau de déclenchement présente une arête tranchante orientée pour venir au contact du fil de retenue avec une composante normale et une composante tangentielle ;
- l'organe d'actionnement comprend des cylindres coaxiaux emboîtés suivant une liaison glissière, les moyens élastiques de compression s'étendant entre deux collerettes solidaires chacune d'un cylindre ;
- le fil de retenue présente un diamètre constant.

Un autre objet de l'invention vise une porte d'aéronef comportant un dispositif d'ouverture d'urgence tel que décrit ci-dessus et dont la première extrémité de liaison est en liaison pivot avec un élément mobile de la porte, et dont la deuxième extrémité de liaison est en liaison pivot avec un autre élément mobile de la porte, une action d'écartement entre lesdits éléments mobiles provoquant une ouverture de la porte.

Un autre objet de l'invention vise un procédé de réarmement d'un dispositif d'ouverture d'urgence tel que décrit ci-dessus, et comportant les étapes suivantes :
- insérer le fil de retenue, muni d'une longueur supplémentaire saillante de sa deuxième extrémité, dans l'organe d'actionnement en insérant le deuxième insert à travers le premier orifice de retenue puis à travers le deuxième orifice de retenue, jusqu'au blocage de la première extrémité du fil de retenue par rapport au premier orifice de retenue grâce au premier insert ;
- mettre en place la fixation de blocage du deuxième insert pour bloquer la deuxième extrémité du fil de retenue par rapport au deuxième orifice de retenue ;
- supprimer la longueur supplémentaire du fil de retenue.

### PRÉSENTATION DES FIGURES

D'autres caractéristiques et avantages de l'invention ressortiront de la description non limitative qui suit, en référence aux dessins annexés dans lesquels :
[Fig.1] La figure 1 représente un dispositif d'ouverture d'urgence selon l'invention, vu en coupe ;
[Fig.2] La figure 2 est une vue de face des moyens de déclenchement du dispositif de la figure 1 ;
[Fig.3] La figure 3 est une variante des moyens de déclenchement de la figure 2 ;
[fig.4] La figure 4 est une vue partielle illustrant une variante du dispositif de la figure 1.

### DESCRIPTION DÉTAILLÉE

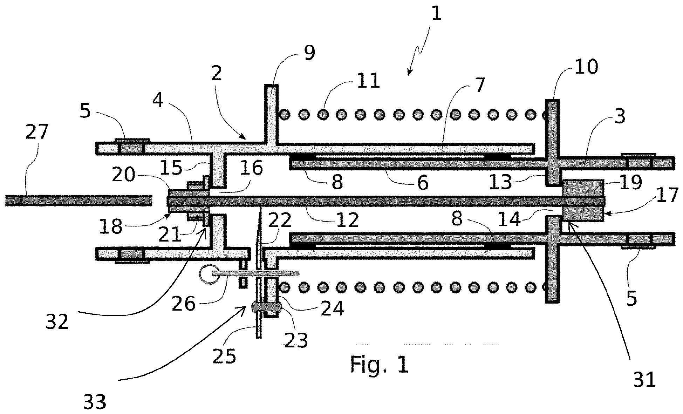

La figure 1 représente un dispositif d'ouverture d'urgence 1 d'une porte d'aéronef, selon l'invention.

Le dispositif 1 comporte un organe d'actionnement tubulaire 2 doté d'une première extrémité de liaison 3 et d'une deuxième extrémité de liaison 4. Ces extrémités de liaison comportent des pièces d'interface 5 permettant de les relier aux éléments de la porte d'aéronef que le dispositif 1 est destiné à ouvrir en cas d'urgence. Dans le présent exemple, les pièces d'interface 5 sont des pivots qui permettent aux extrémités de liaison 3, 4 d'appliquer un effort aux pièces sur lesquelles ils agissent tout en permettant une rotation utile lors des mouvements d'ouverture.

La liaison avec la porte d'aéronef peut se faire de différentes manières ayant en commun la capacité à ouvrir la porte de manière rapide, dans une situation d'urgence, par déploiement de l'organe d'actionnement 2. La porte d'aéronef au sens large inclut l'ouvrant de la porte, le mécanisme d'ouverture de porte, ou encore la structure encadrant la porte et reliée au fuselage et formant le dormant de la porte. Ainsi, la première extrémité de liaison 3 de l'organe d'actionnement 2 est reliée à un élément de la porte (ouvrant, mécanisme d'ouverture, ou structure encadrante) et la deuxième extrémité de liaison 4 est reliée à un autre élément de la porte (ouvrant, mécanisme d'ouverture, ou structure encadrante) tels que l'expansion de l'organe d'actionnement 2 provoque l'actionnement du mécanisme d'ouverture de la porte, et l'ouverture effective de la porte. Par exemple, la première extrémité de liaison de l'organe d'actionnement peut être fixée sur le mécanisme d'ouverture de la porte, et la deuxième extrémité de liaison peut être fixée sur l'ouvrant de la porte. Selon un autre exemple, la première extrémité de liaison de l'organe d'actionnement peut être fixée sur l'ouvrant de la porte, et la deuxième extrémité de liaison peut être fixée sur la structure encadrante de la porte.

L'organe d'actionnement 2 comprend de préférence plusieurs cylindres coaxiaux emboîtés suivant une liaison glissière. Dans le présent exemple, l'organe d'actionnement 2 est constitué d'un tube interne 6 et d'un tube externe 7. Le tube interne 6 est emboîté de manière coulissante sur le tube externe 7 de sorte que l'organe d'actionnement 2 est mobile entre une position rétractée de repos (position représentée à la figure 1) et une position déployée d'ouverture dans laquelle les tubes interne 6 et externe 7 ont coulissé en éloignement l'un de l'autre au maximum. L'organe d'actionnement 2 comporte des bagues de glissement 8 permettant le coulissement mutuel et coaxial du tube interne 6 et du tube externe 7.

Des moyens élastiques de compression sont ici constitués par un ressort hélicoïdal 11 coaxial à l'organe d'actionnement 2 et monté entre une collerette 9 solidaire du tube externe 7, et une collerette 10 solidaire du tube interne 6. Dans la position rétractée illustrée à la figure 1, le ressort 11 est comprimé au maximum.

Un organe de retenue est de plus prévu pour maintenir l'organe d'actionnement 2 dans sa position rétractée, position dans laquelle le ressort 11 est maintenu comprimé. Ces moyens de retenue comprennent un fil de retenue 12 qui, lorsque l'organe d'actionnement 2 est dans sa position rétractée, est tendu entre la première extrémité de liaison 3 et la deuxième extrémité de liaison 4.

Le tube interne 6 comporte, au niveau de la première extrémité de liaison 3, une paroi de fond 13 percée d'un premier orifice de retenue 14. Le tube externe 7 comprend, au niveau de la deuxième extrémité de liaison 4, une paroi de fond 15 percée d'un deuxième orifice de retenue 16.

Le fil de retenue 12 est tendu entre une première fixation 31 constituée ici du premier orifice de retenue 14 et d'une première pièce de blocage 17, et une deuxième fixation 32 constituée ici du deuxième orifice de retenue 16 et d'une deuxième pièce de blocage 18.

La première pièce de blocage 17 peut être constituée par tout moyen permettant le blocage du fil de retenue 12 à l'entrée du premier orifice de retenue 14. Dans le présent exemple, la première pièce de blocage 17 est constituée d'un premier insert 19 fixé sur le fil de retenue 12. Ce premier insert 19 peut par exemple être un insert métallique serti ou un insert en matériau composite rapporté sur le fil de retenue 12 par collage, ou par d'autres procédés propres aux matériaux composites. En variante, le fil de retenue 12 peut être épaissi dans la zone de la première pièce de blocage 17 notamment s'il est constitué de plusieurs brins. Selon une autre variante, un noeud peut constituer la première pièce de blocage 17.

Le fil de retenue 12 est constitué de tout élément filaire, ou groupe d'éléments filaires, adapté à travailler en traction pour assurer la retenue de l'organe d'actionnement 2 en position rétractée. Le fil de retenue 12 peut être constitué par un ou plusieurs brins, tressés ou non tressés, de fil métallique, textile, ou encore de matériau composite, ou de fibre non textile. De préférence, le fil de retenue 12 est conçu, dans sa structure comme dans le choix de son matériau, pour présenter une forte résistance à la traction tout en présentant une faible résistance à une opération de tranchage transversal. De préférence, le fil de retenue présente une forte tenue en traction tout en étant sensible à un effort de tranchage transversal, ce qui est le cas par exemple d'un certain nombre de cordages. Dans un mode de réalisation particulièrement avantageux, le fil de retenue 12 est constitué d'un faisceau de fibres de carbone ou d'aramide qui ont l'avantage de présenter des valeurs très élevées de rupture en traction tout en présentant une faible résistance au tranchage transversal. Le ressort 11 peut être prévu avec un très fort tarage, capable de mettre en mouvement rapidement, lors d'une opération d'ouverture d'urgence, une porte d'aéronef massive (tel que la porte d'un avion long-courrier, qui sont de plus en plus complexes et de plus en plus lourdes, en plus de leur taille conséquente), tout en maintenant voire en réduisant l'effort nécessaire au déclenchement du dispositif d'ouverture d'urgence.

La deuxième pièce de blocage 18 est quant à elle constituée d'un deuxième insert 20 qui peut être du même type que le premier insert 19. Le contour du deuxième insert 20 est cependant fileté, un écrou 21 étant vissé sur cet insert 20 de manière à bloquer cette portion du fil de retenue 12 à l'entrée du deuxième orifice de retenue 16. L'écrou 21 constitue une fixation de blocage sur le deuxième insert 20 qui peut être également réalisée par toute pièce montable de manière amovible sur le deuxième insert 20.

Le premier insert 19 présente une dimension radiale supérieure à la dimension radiale du deuxième insert 20. Dans le présent exemple, les inserts 19, 20 sont cylindriques et cette dimension radiale correspond donc à leur diamètre. Le premier orifice de retenue 14 présente de plus un diamètre supérieur à la dimension radiale du deuxième insert 20 et inférieur à la dimension radiale du premier insert 19. Le deuxième orifice de retenue 16 présente un diamètre supérieur à la dimension radiale du deuxième insert 20.

Le dispositif d'ouverture d'urgence 1 comporte également des moyens de déclenchement adaptés à libérer l'organe de retenue et provoquer le passage de l'organe d'actionnement 2 de sa position rétractée à sa position déployée sous l'effet de l'expansion du ressort 11. Ces moyens de déclenchement comportent ici un organe de sectionnement transversal 33 comprenant un couteau de déclenchement 22 monté tournant autour d'un pivot 23 d'une chape 24 solidaire du tube externe 7. Le couteau de déclenchement 22 s'étend ainsi dans un plan de coupe perpendiculaire au fil de retenue 12, le pivot 23 étant perpendiculaire au plan de coupe.

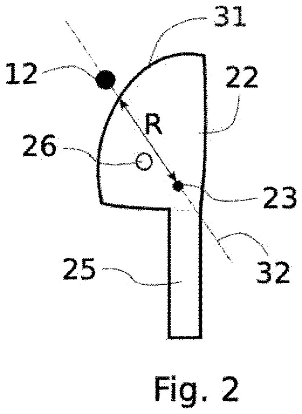

La figure 2 est une vue de face du couteau de déclenchement 22. Le couteau de déclenchement 22 comporte un levier de commande 25 permettant de l'actionner en rotation autour du pivot 23. Dans l'exemple de la figure 2, l'arête tranchante 31 du couteau de déclenchement 22 présente, aux abords du fil de retenue 12, un contour en forme de portion de spirale permettant de s'approcher en tournant du fil de retenue 12, de sorte que l'actionnement du levier de commande 25 provoque le tranchage sans effort du fil de retenue 12 par le couteau de déclenchement 22. Par exemple, le couteau de déclenchement 22 peut présenter une arête tranchante 31 courbe dont le rayon de courbure est supérieur au rayon R défini entre le pivot 23 et le fil tranchant 31 dans une direction 32 passant par le pivot 23 et par le fil de retenue 12.

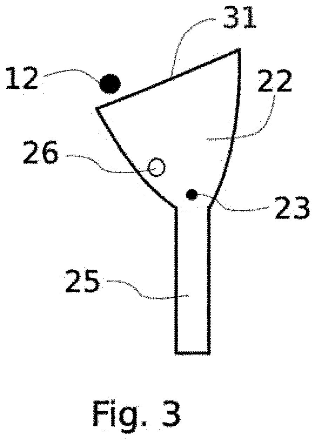

Cependant, l'arête 31 n'est pas nécessairement courbe, elle peut être rectiligne, ou d'une autre forme, et présenter un angle d'incidence oblique par rapport au fil de retenue 12 de sorte que le pivotement du couteau 22 autour du pivot 23 amène l'arête tranchante 31 à contacter le fil de retenue 12 avec une composante normale et une composante tangentielle optimisée pour réduire l'effort nécessaire à couper le fil de retenue 12. La figure 3 illustre une variante rectiligne de l'arête tranchante 31. Quelle que soit la forme choisie pour l'arête tranchante 31, celle-ci est donc conformée de préférence pour venir au contact du fil de retenue 12 avec une force présentant une composante normale, fournissant l'effort de coupe, ainsi qu'une composant tangentielle, fournissant un mouvement tangentiel de tranchage.

Les moyens de déclenchement comportent de plus une goupille de sécurité 26 permettant de bloquer toute action accidentelle sur le couteau de déclenchement 22.

Lorsqu'un utilisateur souhaite provoquer l'ouverture d'urgence de la porte d'aéronef, il enlève la goupille 26 et actionne le levier de commande 25, ce qui provoque le sectionnement transversal du fil de retenue 12 avec un faible effort. L'organe d'actionnement 2 n'étant plus retenu dans sa position rétractée, le ressort 11 entraine l'organe d'actionnement 2 vers sa position déployée, provoquant un écartement entre la première extrémité 3 et la deuxième extrémité 4, ce qui provoque l'ouverture d'urgence de la porte d'aéronef.

Le fil de maintien 12 est dimensionné en section, en fonction de son matériau, pour supporter l'effort de traction du ressort 11. Le fil de maintien 12 étant prévu pour une rupture par tranchage, aucune portion sécable ou frangible n'est nécessaire, le fil de maintien 12 étant de préférence de diamètre constant.

Lors de la fabrication du dispositif 1, ou lors de son réarmement à la suite d'un déclenchement, le dispositif 1 est tout d'abord dépourvu de fil de retenue 12.

Un fil de retenue 12 est préparé avec ses deux inserts 19, 20 et une longueur supplémentaire 27 dépassant au-delà du deuxième insert 20. Le fil de retenue 12 est ensuite inséré dans l'organe d'actionnement 2 en faisant passer la longueur supplémentaire 27 à travers le premier orifice de retenue 14 puis à travers le deuxième orifice de retenue 16. Le deuxième insert 20 est ainsi passé à travers le premier orifice de retenue 14. Le premier insert 19 vient ensuite en butée contre les rebords du premier orifice de retenue 14.

L'organe d'actionnement 2 est alors comprimé par des moyens externes, de maintenance ou de fabrication, par exemple par un vérin. Si le procédé vise le réarmement d'un dispositif d'ouverture d'urgence déjà monté sur une porte d'aéronef, l'organe d'actionnement 2 peut être comprimé en refermant la porte avec les outils adaptés. La compression de l'organe d'actionnement 2 entraine la compression du ressort 11 jusqu'à la position de la figure 1. Le deuxième insert 20 est ainsi passé à travers le deuxième orifice de retenue 16 grâce au guidage apporté par la longueur supplémentaire 27 du fil de retenue 12.

Le deuxième insert 20 ayant traversé le deuxième orifice de retenue 16, l'écrou 21 est alors mis en place sur le deuxième insert 20 et serré jusqu'à obtenir la position rétractée de repos illustrée à la figure 1. La longueur supplémentaire 27 est ensuite tranchée au niveau du deuxième insert 20. En variante, la longueur supplémentaire 27 est simplement reliée de manière amovible à l'extrémité du fil de retenue 12 du côté du deuxième insert 20, par exemple par un anneau.

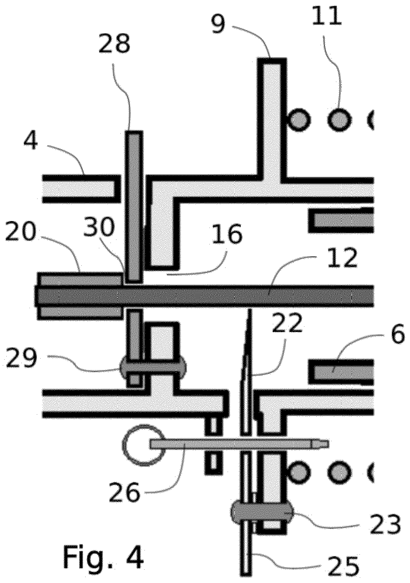

La figure 4 illustre une variante pour la deuxième pièce de blocage 18. Selon cette variante, la fixation de blocage du deuxième insert 20 est un flasque 28 mobile en rotation autour d'un axe 29 et comportant une gorge 30 dont la largeur est inférieure au diamètre du deuxième insert 20. La mise en place de l'écrou 21 est ainsi avantageusement remplacée par la mise en place par rotation du flasque 28 dans une position de blocage du deuxième insert 20.

Des variantes de réalisation du dispositif d'ouverture d'urgence peuvent être mises en oeuvre. L'organe d'actionnement 2 peut être un organe tubulaire constitué de plus de deux tubes emboîtés les uns dans les autres.

Selon une variante, l'organe d'actionnement 2 et les moyens élastiques de compression 11 peuvent être constitués d'une seule et même pièce. Une telle pièce peut avoir la forme d'un ressort tubulaire stabilisé en flexion.

Le couteau de déclenchement peut être monté à d'autres endroits que sur le tube externe 7, par exemple sur le tube interne 6 ou à tout autre endroit permettant d'accéder transversalement au fil de retenue 12. En variante, le couteau de déclenchement 22 peut être constitué par d'autres éléments tranchants tels de des ciseaux. Le couteau de déclenchement 22 peut être aussi commandé à distance par un câble plutôt que par un levier de commande 25.

## Revendications

1. Dispositif d'ouverture d'urgence d'une porte d'aéronef, comprenant :
- un organe d'actionnement tubulaire (2) doté d'une première extrémité de liaison (3) et d'une deuxième extrémité de liaison (4), cet organe d'actionnement tubulaire (2) étant commutable entre une position rétractée de repos et une position déployée d'ouverture ;
- des moyens élastiques de compression (11) adaptés à solliciter l'organe d'actionnement tubulaire (2) de sa position rétractée vers sa position déployée ;
- un organe de retenue de l'organe d'actionnement tubulaire (2) dans sa position rétractée avec les moyens élastiques de compression (11) maintenus comprimés ;
- des moyens de déclenchement adaptés à libérer l'organe de retenue et provoquer le passage de l'organe d'actionnement tubulaire (2) à sa position déployée sous l'effet de l'expansion des moyens élastiques de compression (11) ;
ce dispositif d'ouverture d'urgence étant **caractérisé en ce que** :
- l'organe de retenue comporte un fil de retenue (12) qui, lorsque l'organe d'actionnement tubulaire (2) est en position rétractée, est maintenu tendu entre une première fixation (31) à la première extrémité de liaison (3) et une deuxième fixation (32) à la deuxième extrémité de liaison (4) de l'organe d'actionnement tubulaire (2) ;
- les moyens de déclenchement comportent un organe de sectionnement transversal (33) du fil de retenue (12).

2. Dispositif d'ouverture d'urgence selon la revendication 1, **caractérisé en ce que** la première extrémité de liaison (3) comporte une première paroi de fond (13) sur laquelle est disposée la première fixation (31), et la deuxième extrémité de liaison (4) comporte une deuxième paroi de fond (15) sur laquelle est disposée la deuxième fixation (32).

3. Dispositif d'ouverture d'urgence selon la revendication 2, **caractérisé en ce que** la première fixation (31) comporte un premier orifice de retenue (14), pratiqué dans la première paroi de fond (13), dans lequel est engagé une première extrémité du fil de retenue (12), et la deuxième fixation (32) comporte un deuxième orifice de retenue (16), pratiqué dans la deuxième paroi de fond (15), dans lequel est engagé une deuxième extrémité du fil de retenue (12).

4. Dispositif d'ouverture d'urgence selon la revendication 3, **caractérisé en ce que** la première fixation (31) comprend, à la première extrémité du fil de retenue (12), une première pièce de blocage (17) du fil de retenue (12) par rapport au premier orifice de retenue (14), et la deuxième fixation (32) comprend, à la deuxième extrémité du fil de retenue (12), une deuxième pièce de blocage (18) du fil de retenue (12) par rapport au deuxième orifice de retenue (16).

5. Dispositif d'ouverture d'urgence selon la revendication 4, **caractérisé en ce que** la première pièce de blocage (17) comporte un premier insert (19) fixé sur le fil de retenue (12), et la deuxième pièce de blocage (18) comporte un deuxième insert (20) fixé sur le fil de retenue (12).

6. Dispositif d'ouverture d'urgence selon la revendication 5, **caractérisé en ce que** :
- le premier insert (19) présente une dimension radiale supérieure à la dimension radiale du deuxième insert (20) ;
- le premier orifice de retenue (14) présente un diamètre supérieur à la dimension radiale du deuxième insert (20) et inférieur à la dimension radiale du premier insert (19) ;
- le deuxième orifice de retenue (16) présente un diamètre supérieur à la dimension radiale du deuxième insert (20) ;
- la deuxième pièce de blocage (18) comporte une fixation de blocage du deuxième insert (20) pour le blocage du deuxième insert (20) par rapport au deuxième orifice de retenue (16).

7. Dispositif d'ouverture d'urgence selon la revendication 6, **caractérisé en ce que** la fixation de blocage est choisie entre un écrou (21) et un flasque (28) mobile en rotation et comportant une gorge (30) de blocage du deuxième insert (20).

8. Dispositif d'ouverture d'urgence selon l'une quelconque des revendications précédentes, **caractérisé en ce que** le fil de retenue (12) est constitué d'un faisceau de fibres de carbone ou d'aramide.

9. Dispositif d'ouverture d'urgence selon l'une quelconque des revendications précédentes, **caractérisé en ce que** l'organe de sectionnement transversal (33) comprend un couteau de déclenchement (22) s'étendant dans un plan de coupe sensiblement perpendiculaire au fil de retenue (12), le couteau de déclenchement (22) étant monté pivotant sur l'organe d'actionnement tubulaire (2), autour d'un pivot (23) perpendiculaire au plan de coupe.

10. Dispositif d'ouverture d'urgence selon la revendication 9, **caractérisé en ce que** l'organe de sectionnement transversal (33) comporte un levier de commande (25) saillant de l'organe d'actionnement tubulaire (2) et adapté à entraîner l'organe de sectionnement transversal (33) contre le fil de retenue (12) par pivotement autour du pivot (23).

11. Dispositif d'ouverture d'urgence selon l'une des revendications 9 ou 10, **caractérisé en ce que** l'organe de sectionnement transversal (33) présente une arête tranchante (31) orientée pour venir au contact du fil de retenue (12) avec une composante normale et une composante tangentielle.

12. Dispositif d'ouverture d'urgence selon l'une quelconque des revendications précédentes, **caractérisé en ce que** l'organe d'actionnement tubulaire (2) comprend des cylindres coaxiaux (6,7) emboîtés suivant une liaison glissière, les moyens élastiques de compression (11) s'étendant entre deux collerettes (9,10) solidaires chacune d'un cylindre (6,7).

13. Dispositif d'ouverture d'urgence selon l'une quelconque des revendications précédentes, **caractérisé en ce que** le fil de retenue (12) présente un diamètre constant.

14. Porte d'aéronef **caractérisée en ce qu'**elle comporte un dispositif d'ouverture d'urgence conforme à l'une des revendications 1 à 13 dont la première extrémité de liaison (3) est en liaison pivot avec un élément mobile de la porte, et dont la deuxième extrémité de liaison (4) est en liaison pivot avec un autre élément mobile de la porte, une action d'écartement entre lesdits éléments mobiles provoquant une ouverture de la porte.

15. Procédé de réarmement d'un dispositif d'ouverture d'urgence conforme à l'une des revendications 6 ou 7, **caractérisé en ce qu'**il comporte les étapes suivantes :
- insérer le fil de retenue (12), muni d'une longueur supplémentaire (27) saillante de sa deuxième extrémité, dans l'organe d'actionnement tubulaire (2) en insérant le deuxième insert (20) à travers le premier orifice de retenue (14) puis à travers le deuxième orifice de retenue (16), jusqu'au blocage de la première extrémité du fil de retenue (12) par rapport au premier orifice de retenue (14) grâce au premier insert (19) ;
- mettre en place la fixation de blocage du deuxième insert (20) pour bloquer la deuxième extrémité du fil de retenue (12) par rapport au deuxième orifice de retenue (16) ;
- supprimer la longueur supplémentaire (27) du fil de retenue (12).

## Patentansprüche

1. Notöffnungsvorrichtung einer Flugzeugtür, umfassend:
- ein rohrförmiges Betätigungsorgan (2) mit einem ersten Verbindungsende (3) und einem zweiten Verbindungsende (4), wobei dieses rohrförmige Betätigungsorgan (2) zwischen einer zurückgezogenen Ruheposition und einer ausgefahrenen Öffnungsposition umstellbar ist;
- elastische Kompressionsmittel (11), die dazu eingerichtet sind, das rohrförmige Betätigungsorgan (2) aus seiner zurückgezogenen Position zu seiner ausgefahrenen Position hin vorzuspannen;
- ein Organ zum Halten des rohrförmigen Betätigungsorgans (2) in seiner zurückgezogenen Position, wobei die elastischen Kompressionsmittel (11) zusammengedrückt gehalten werden;
- Auslösemittel, die dazu eingerichtet sind, das Haltorgan freizugeben und die Umstellung des rohrförmigen Betätigungsorgans (2) unter der Wirkung der Ausdehnung der elastischen Kompressionsmittel (11) in seine ausgefahrene Position zu bewirken;
wobei diese Notöffnungsvorrichtung **dadurch gekennzeichnet ist, dass**:
- das Halteorgan einen Haltedraht (12) aufweist, der, wenn sich das rohrförmige Betätigungsorgan (2) in der zurückgezogenen Position befindet, zwischen einer ersten Halterung (31) am ersten Verbindungsende (3) und einer zweiten Halterung (32) am zweiten Verbindungsende (4) des rohrförmigen Betätigungsorgans (2) gespannt gehalten wird;
- die Auslösemittel ein Organ zum Querdurchtrennen (33) des Haltedrahtes (12) aufweisen.

2. Notöffnungsvorrichtung nach Anspruch 1, **dadurch gekennzeichnet, dass** das erste Verbindungsende (3) eine erste Bodenwand (13) aufweist, auf der die erste Halterung (31) angeordnet ist, und das zweite Verbindungsende (4) eine zweite Bodenwand (15) aufweist, auf der die zweite Halterung (32) angeordnet ist.

3. Notöffnungsvorrichtung nach Anspruch 2, **dadurch gekennzeichnet, dass** die erste Halterung (31) eine erste Halteöffnung (14) aufweist, die in der ersten Bodenwand (13) ausgebildet ist und in die ein erstes Ende des Haltedrahtes (12) eingreift, und die zweite Halterung (32) eine zweite Halteöffnung (16) aufweist, die in der zweiten Bodenwand (15) ausgebildet ist und in die ein zweites Ende des Haltedrahtes (12) eingreift.

4. Notöffnungsvorrichtung nach Anspruch 3, **dadurch gekennzeichnet, dass** die erste Halterung (31) am ersten Ende des Haltedrahtes (12) ein erstes Blockierstück (17) zum Blockieren des Haltedrahtes (12) bezüglich der ersten Halteöffnung (14) umfasst und die zweite Halterung (32) am zweiten Ende des Haltedrahtes (12) ein zweites Blockierstück (18) zum Blockieren des Haltedrahtes (12) bezüglich der zweiten Halteöffnung (16) umfasst.

5. Notöffnungsvorrichtung nach Anspruch 4, **dadurch gekennzeichnet, dass** das erste Blockierstück (17) einen auf dem Haltedraht (12) befestigten ersten Einsatz (19) aufweist und das zweite Blockierstück (18) einen auf dem Haltedraht (12) befestigten zweiten Einsatz (20) aufweist.

6. Notöffnungsvorrichtung nach Anspruch 5, **dadurch gekennzeichnet, dass**:
- der erste Einsatz (19) eine radiale Abmessung aufweist, die größer als die radiale Abmessung des zweiten Einsatzes (20) ist;
- die erste Halteöffnung (14) einen Durchmesser aufweist, der größer als die radiale Abmessung des zweiten Einsatzes (20) und kleiner als die radiale Abmessung des ersten Einsatzes (19) ist;
- die zweite Halteöffnung (16) einen Durchmesser aufweist, der größer als die radiale Abmessung des zweiten Einsatzes (20) ist;
- das zweite Blockierstück (18) ein Blockierelement des zweiten Einsatzes (20) zum Blockieren des zweiten Einsatzes (20) bezüglich der zweiten Halteöffnung (16) aufweist.

7. Notöffnungsvorrichtung nach Anspruch 6, **dadurch gekennzeichnet, dass** das Blockierelement aus einer Mutter (21) und einer drehbeweglichen und eine Auskehlung (30) zum Blockieren des zweiten Einsatzes (20) aufweisenden Wange (28) ausgewählt ist.

8. Notöffnungsvorrichtung nach einem der vorhergehenden Ansprüche, **dadurch gekennzeichnet, dass** der Haltedraht (12) aus einem Kohle- oder Aramidfaserbündel besteht.

9. Notöffnungsvorrichtung nach einem der vorhergehenden Ansprüche, **dadurch gekennzeichnet, dass** das Organ zum Querdurchtrennen (33) ein Auslösemesser (22) umfasst, das sich in einer im Wesentlichen zu dem Haltedraht (12) senkrechten Schneidebene erstreckt, wobei das Auslösemesser (22) an dem rohrförmigen Betätigungsorgan (2) um einen zur Schneidebene senkrechten Drehzapfen (23) schwenkbar gelagert ist.

10. Notöffnungsvorrichtung nach Anspruch 9, **dadurch gekennzeichnet, dass** das Organ zum Querdurchtrennen (33) einen Steuerhebel (25) aufweist, der von dem rohrförmigen Betätigungsorgan (2) vorsteht und dazu eingerichtet ist, das Organ zum Querdurchtrennen (33) durch Schwenkung um den Drehzapfen (23) gegen den Haltedraht (12) zu treiben.

11. Notöffnungsvorrichtung nach einem der Ansprüche 9 oder 10, **dadurch gekennzeichnet, dass** das Organ zum Querdurchtrennen (33) eine Schneidkante (31) aufweist, die so ausgerichtet ist, dass sie mit dem Haltedraht (12) mit einer normalen Komponente und einer tangentialen Komponente in Kontakt kommt.

12. Notöffnungsvorrichtung nach einem der vorhergehenden Ansprüche, **dadurch gekennzeichnet, dass** das rohrförmige Betätigungsorgan (2) koaxiale Zylinder (6, 7) umfasst, die mit einer Gleitverbindung zusammengeschoben sind, wobei sich die elastischen Kompressionsmittel (11) zwischen zwei Flanschen (9, 10) erstrecken, die jeweils mit einem Zylinder (6, 7) fest verbunden sind.

13. Notöffnungsvorrichtung nach einem der vorhergehenden Ansprüche, **dadurch gekennzeichnet, dass** der Haltedraht (12) einen konstanten Durchmesser aufweist.

14. Flugzeugtür, **dadurch gekennzeichnet, dass** sie eine Notöffnungsvorrichtung gemäß einem der Ansprüche 1 bis 13 aufweist, deren erstes Verbindungsende (3) in Schwenkverbindung mit einem beweglichen Element der Tür steht und deren zweites Verbindungsende (4) in Schwenkverbindung mit einem anderen beweglichen Element der Tür steht, wobei eine Aktion des Entfernens der beweglichen Elemente voneinander ein Öffnen der Tür bewirkt.

15. Verfahren zur Wiederaktivierung einer Notöffnungsvorrichtung gemäß einem der Ansprüche 6 oder 7, **dadurch gekennzeichnet, dass** es die folgenden Schritte umfasst:
- Einschieben des mit einer von seinem zweiten Ende vorstehenden zusätzlichen Länge (27) versehenen Haltedrahtes (12) in das rohrförmige Betätigungsorgan (2) durch Einschieben des zweiten Einsatzes (20) durch die erste Halteöffnung (14) hindurch und danach durch die zweite Halteöffnung (16) hindurch bis zum Blockieren des ersten Endes des Haltedrahtes (12) bezüglich der ersten Halteöffnung (14) durch den ersten Einsatz (19);
- Anbringen des Blockierelements des zweiten Einsatzes (20), um das zweite Ende des Haltedrahtes (12) bezüglich der zweiten Halteöffnung (16) zu blockieren;
- Entfernen der zusätzlichen Länge (27) des Haltedrahtes (12) .

## Claims

1. An emergency opening device for an aircraft door, comprising:
- a tubular actuating member (2) provided with a first connecting end (3) and a second connecting end (4), this tubular actuating member (2) being able to switch between a retracted rest position and a deployed open position;
- elastic compression means (11) designed to urge the tubular actuating member (2) from its retracted position toward its deployed position;
- a member for retaining the tubular actuating member (2) in its retracted position with the elastic compression means (11) kept compressed;
- triggering means designed to release the retaining member and cause the tubular actuating member (2) to transition into its deployed position under the effect of the expansion of the elastic compression means (11);
this emergency opening device being **characterized in that**:
- the retaining member has a retaining cord (12) which, when the tubular actuating member (2) is in the retracted position, is held taut between a first fastener (14, 17) at the first connecting end (3) and a second fastener (16, 18) at the second connecting end (4) of the tubular actuating member (2);
- the triggering means have a member (22) for transversely severing the retaining cord (12).

2. The emergency opening device as claimed in claim 1, **characterized in that** the first connecting end (3) has a first bottom wall (13) on which the first fastener (14, 17) is arranged, and the second connecting end (4) has a second bottom wall (15) on which the second fastener (16, 18) is arranged.

3. The emergency opening device as claimed in claim 2, **characterized in that** the first fastener (14, 17) has a first retaining orifice (14), made in the first bottom wall (13), in which is fitted a first end of the retaining cord (12), and the second fastener (16, 18) has a second retaining orifice (16), made in the second bottom wall (15), in which is fitted a second end of the retaining cord (12).

4. The emergency opening device as claimed in claim 3, **characterized in that** the first fastener (14, 17) comprises, at the first end of the retaining cord (12), a first part (17) for locking the retaining cord (12) in relation to the first retaining orifice (14), and the second fastener (16, 18) comprises, at the second end of the retaining cord (12), a second part (20, 21, 28) for locking the retaining cord (12) in relation to the second retaining orifice (16).

5. The emergency opening device as claimed in claim 4, **characterized in that** the first locking part (17) has a first insert (19) fastened to the retaining cord (12), and the second locking part (18) has a second insert (20) fastened to the retaining cord (12).

6. The emergency opening device as claimed in claim 5, **characterized in that**:
- the first insert (19) has a radial dimension greater than the radial dimension of the second insert (20);
- the first retaining orifice (14) has a diameter greater than the radial dimension of the second insert (20) and less than the radial dimension of the first insert (19);
- the second retaining orifice (16) has a diameter greater than the radial dimension of the second insert (20);
- the second locking part (18) has a fastener (21, 28) for locking the second insert (20) in order to lock the second insert (20) in relation to the second retaining orifice (16).

7. The emergency opening device as claimed in claim 6, **characterized in that** the locking fastener is a rotatable flange (28) having a groove (30) for locking the second insert (20).

8. The emergency opening device as claimed in any one of the preceding claims, **characterized in that** the retaining cord (12) is made up of a bundle of carbon fibers or aramid fibers.

9. The emergency opening device as claimed in any one of the preceding claims, **characterized in that** the transverse-severing member (22) comprises a triggering knife extending in a cutting plane substantially perpendicular to the retaining cord (12), the triggering knife being mounted so as to be able to pivot on the tubular actuating member (2), about a pivot (23) perpendicular to the cutting plane.

10. The emergency opening device as claimed in claim 9, **characterized in that** the transverse-severing member (22) has a control lever (25) projecting from the tubular actuating member (2) and designed to drive the transverse-severing member (22) against the retaining cord (12) by pivoting about the pivot (23).

11. The emergency opening device as claimed in either of claims 9 and 10, **characterized in that** the transverse-severing member (22) has a sharp edge (31) oriented to come into contact with the retaining cord (12) by way of a normal component and a tangential component.

12. The emergency opening device as claimed in any one of the preceding claims, **characterized in that** the tubular actuating member (2) comprises coaxial cylinders (6, 7) that are nested in a slide connection, the elastic compression means (11) extending between two collars (9, 10), each of which is integral with a cylinder (6, 7).

13. The emergency opening device as claimed in any one of the preceding claims, **characterized in that** the retaining cord (12) has a constant diameter.

14. An aircraft door, **characterized in that** it has an emergency opening device as claimed in one of claims 1 to 13, the first connecting end (3) of which is in pivot connection with a movable element of the door, and the second connecting end (4) of which is in pivot connection with another movable element of the door, an action of moving said movable elements away from one another causing the door to open.

15. A method for resetting an emergency opening device as claimed in either of claims 6 and 7, **characterized in that** it has the following steps:
- inserting the retaining cord (12), provided with an additional length (27) projecting from its second end, into the tubular actuating member (2) by inserting the second insert (20) through the first retaining orifice (14) and then through the second retaining orifice (16), until the first insert (19) locks the first end of the retaining cord (12) in relation to the first retaining orifice (14);
- placing the fastener (21, 28) for locking the second insert (20) so as to lock the second end of the retaining cord (12) in relation to the second retaining orifice (16);
- removing the additional length (27) of the retaining cord (12).
